# EUROPEAN PATENT SPECIFICATION

(11) **EP 1 101 414 B1**
(45) Date of publication and mention of the grant of the patent: **28.07.2004**
(21) Application number: 00204145.7
(22) Date of filing: 21.11.2000
(51) Int. Cl.: A23P 1/08

(54) **Food ingredient**
Nahrungsmittelbestandteil
Ingredient alimentaire

(30) Priority: 22.11.1999 NL 1013638
(43) Date of publication of application: 23.05.2001
(73) Proprietor: Becker, Wilhelmus Frederikus Maria, 6641 KV Beuningen (NL)
(72) Inventor: Becker, Wilhelmus Frederikus Maria, 6641 KV Beuningen (NL)
(74) Representative: Prins, Adrianus Willem, Mr. Ir.

(56) References cited:
- AU-A- 7 114 281
- DE-A- 3 515 783
- DE-A- 4 309 223
- DE-U- 29 611 167
- FR-A- 2 558 689
- FR-A- 2 715 045
- FR-A- 2 739 758
- GB-A- 2 062 436
- US-A- 2 027 596
- US-A- 4 640 187

## Description

This invention relates to a package containing a food ingredient. There are many different food ingredients known, such as potatoes, aubergines, or other tuberous plants, croquettes, meatballs, chow mein balls, or other mixture of ingredients. For the preparation of these different food ingredients, there is a wide range of preparative operations available, such as boiling, steaming, frying, roasting, deep-frying, broiling, microwave irradiation, braising, blanching, poaching, stir-frying, stone-grilling, fondue, barbecuing, not preparing, or a combination of these preparative operations. Such a food ingredient may be provided in many different forms, for instance in angular, round, flat or elongate food elements. The forms of food elements as known to date are specifically intended to provide a tasty appearance, so that the appetite is whetted.

A disadvantage of the food ingredients already known is that after preparation they can oftentimes arouse the interest of the eater, and in particular little children, only to a minor extent.

The object of the present invention is to provide a package comprising a new food ingredient which after preparation can be served in different highly attractive ways.

To that end, the invention provides a package containing food ingredient comprising a number of first food elements and a number of second food elements, which food elements are not assembled, while each first and each second food element, after undergoing at least one preparative operation, is suitable for consumption, the shape of the first food element being tailored to the shape of the second food element, such that, after preparation, they can cooperate to form a third, composite food element, the form of the first and second food elements being such that children are stimulated to explore the food ingredient by taking the food elements into their hands to assemble them, thereby lowering the threshold for the child to put a food element into his/her mouth.

The first and second food elements of the food ingredient are served after the at least one preparative operation.

Due to the first and second food element having a shape such that a third food element can be assembled with them, children in particular will be stimulated to explore the food ingredient. In this exploration the youthful consumer will take the food elements into his/her hands to assemble them and the threshold for him to put a food element into his mouth as well is thereby lowered. Children, but also adults, will therefore proceed to consume food they would not find interesting in a conventional form.

Preferably, the second food element is at least partly receivable in the first food element. That provides a very simple form of cooperation between a first and a second food element, so that the purpose of the prepared food ingredient is immediately crystal-clear to a consumer.

In a further elaboration, the first food element has substantially a convex outer surface provided with at least one cavity accessible from the outer surface, while the second food element has substantially a convex outer surface and is at least partly receivable in the at least one cavity of the first food element. This is an elaboration of the invention which is generally well applicable.

In a preferred embodiment, the cavity has a cylindrical configuration, while the second food element has a massive cylindrical shape, such that the second food element is receivable in the at least one cylindrical cavity of the first food element. The cylindrical shape provides many possibilities of cooperation between the first and second food elements.

Preferably, the second food element has been formed from the first food element, such that in the first food element a cavity accessible from the outer surface has been created. That provides a simple method of producing the second food element from the first food element, whereby a cavity is created that can receive the second food element.

The first and the second food element can be manufactured from a tubular plant, a bulbous plant, a vegetable or fruit. In addition, they can substantially comprise a mixture of ingredients, such that upon preparation of the mixture of ingredients, the shapes of the first and the second food element are preserved. The merit of the invention is also exemplary if the first and the second food element are manufactured from potatoes.

The invention further provides a package provided with a number of food ingredients according to the invention. Thus, a number of food ingredients can be stored in the package after it has been produced, so that it can be supplied as a complete set, and a fixed amount can be supplied for preparation and consumption. The size of the package is dependent on the target group for which it is intended, for instance the catering industry, the family, or a single person.

The invention will now be further explained on the basis of four exemplary embodiments with corresponding figures.
Fig. 1 shows a front view of a first exemplary embodiment of the invention;
Fig. 2 shows a top plan view of the front view of the first exemplary embodiment represented in Fig. 1;
Fig. 3 shows a front view of a second exemplary embodiment;
Fig. 4 shows a top plan view of the front view of the second exemplary embodiment represented in Fig. 3;
Fig. 5 shows a front view of a third exemplary embodiment;
Fig. 6 shows a top plan view of the front view of the third exemplary embodiment represented in Fig. 5;
Fig. 7 shows a front view of a fourth exemplary embodiment; and
Fig. 8 shows a top plan view of the front view of the fourth exemplary embodiment represented in Fig. 7.

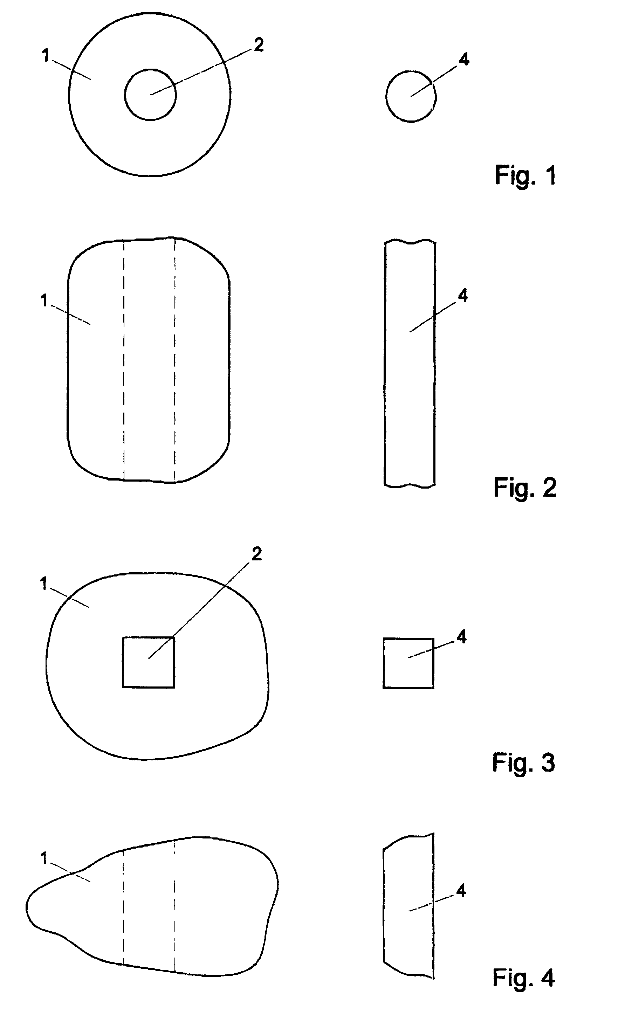

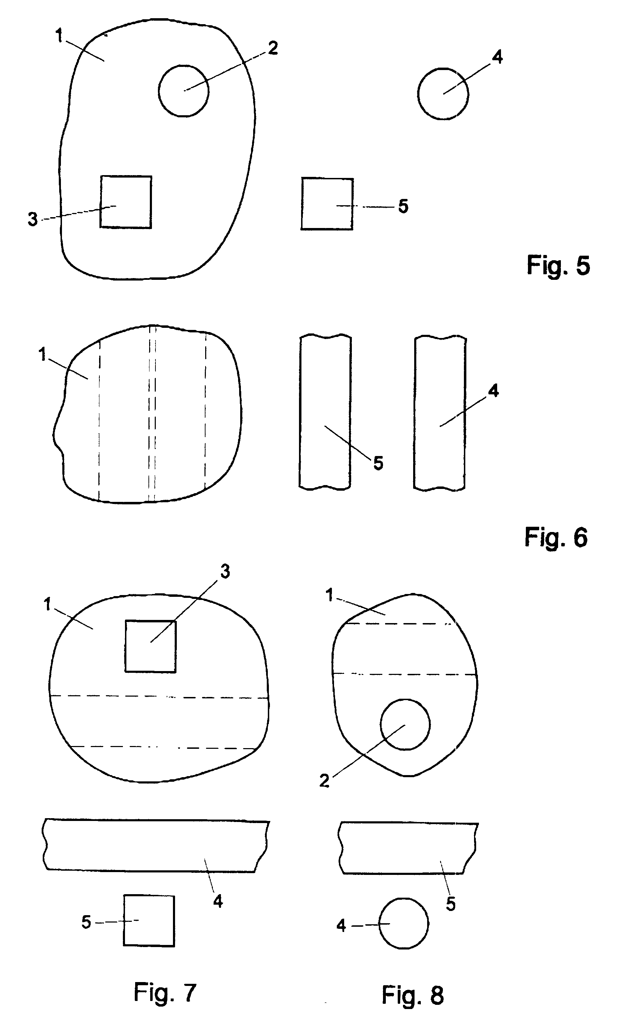

The four exemplary embodiments represented in Figs. 1-8 each show one food ingredient contained in a package according to the invention. Each of these four food ingredients includes a first food element 1. In the first exemplary embodiment, the first food element 1 is provided with a cylindrical cavity 2. Further, the first exemplary embodiment includes a second, elongate food element 4 having the shape of a cylinder, such that it is receivable in the cylindrical cavity 2 in the first food element 1.

The second exemplary embodiment shows a first food element 1, provided with a cavity 2 having a square cross section, and a second, elongate food element 4 having a square cross section, such that it is receivable in the cavity 2 in the first food element 1.

The third exemplary embodiment shows a food ingredient having a first food element 1 which is provided with a first cylindrical cavity 2, and a second cavity 3, extending parallel along the first cavity 2, having a square cross section. Further, the food ingredient includes a second food element 4 in the shape of a cylinder, such that it is receivable in the first cavity 2 in the first food element 1. In addition, the food ingredient includes a third, elongate food element 5, which has a square cross section, such that it is receivable in the second cavity 3 in the first food element 1.

The fourth exemplary embodiment shows a food ingredient including a first food element 1 which is provided with a first cylindrical cavity 2, and a second cavity 3, extending at right angles along the first cavity 2, having a square cross section. Further, the food ingredient includes a second, elongate food element 4 in the shape of a massive cylinder, such that it is receivable in the first cavity 2 in the first food element 1. In addition, the food ingredient includes a third, elongate food element 5 which has a square cross section, such that it is receivable in the second cavity 3 in the first food element 1.

In each of the four exemplary embodiments, there can be cooperation between the first food element 1 on the one hand and the second or, if available, third, food element 4 or 5, respectively, on the other. For that purpose serve the first and second cavity, 2 and 3, respectively, in which the second and third food element, 4 and 5, respectively, are at least partly receivable. After one or a few preparative operations, the different food elements 1, 4, 5 can be jointly presented for consumption. Due to the food elements 1, 4, 5 being able to cooperate with each other, a number of food ingredients can be served in different ways. Thus, the food elements 4, 5 may be served as loose entities next to a first food element 1, but may also be slipped into the respective cavities 2, 3 in the first food element 1, yielding a composite food element. A number of such composite food elements can moreover be strung together by means of the food elements 4, 5, which also provides an option in serving. These are only a few examples of the large variety of ways of serving a number of food ingredients provided according to the present invention after preparation. Due to the food elements 1, 4, 5 being able to cooperate with each other, they arouse the interest of an eater, so that the prepared food ingredient will be consumed with pleasure.

A single package, for instance a carton or a plastic bag, may, for instance, be filled with a number of food ingredients according to the invention, so that the package contains both first and second food elements. Thus, a fixed amount of the different food elements 1, 4, 5 can be put together, stored, and thus be presented to a target group. The target group can be the catering industry, for which the amount comprises a large number of meal quantities, or a family for which the package is filled with one or a few meal quantities.

It will be clear that the invention is not limited to the exemplary embodiment described, but that various modifications are possible within the scope of the invention.

Thus, the invention can be used for many different ingredients, such as tubular plants, bulbous plants, vegetables, fruit, meat, puree, or a mixture of ingredients.

The shape of the food ingredient is not limited to the shapes of the different food elements 1, 4, 5 of the exemplary embodiments.

## Claims

1. A package containing a food ingredient comprising a number of first food elements (1) and a number of second food elements (4, 5), which food elements are not assembled, wherein each first (1) and each second food element (4, 5), after undergoing at least one preparative operation, is suitable for consumption, the shape of the first food element (1) being tailored to the shape of the second food element (4, 5), such that, after preparation, they can cooperate to form a third, composite food element, the form of the first and second food elements being such that children are stimulated to explore the food ingredient by taking the food elements into their hands to assemble them, thereby lowering the threshold for the child to put a food element into his/her mouth.

2. A package according to claim 1, **characterized in that** the second food element (4, 5) is at least partly receivable in the first food element (1).

3. A package according to claim 1 or 2, **characterized in that** the first food element (1) has substantially a convex outer surface provided with at least one cavity (2, 3) accessible from the outer surface, while the second food element (4, 5) has substantially a convex outer surface and is at least partly receivable in the at least one cavity (2, 3) of the first food element (1).

4. A package according to claim 3, **characterized in that** the cavity (2, 3) has a cylindrical configuration, while the second food element (4, 5) has a massive cylindrical shape, such that the second food element (4, 5) is receivable in the at least one cylindrical cavity (2, 3) of the first food element (1).

5. A package according to any one of the preceding claims, **characterized in that** the second food element (4, 5) has been formed from the first food element (1), such that in the first food element (1) a cavity (2, 3) accessible from the outer surface has been created.

6. A package according to any one of the preceding claims, **characterized in that** the first (1) and the second food element (4, 5) are a tuberous plant.

7. A package according to claims 1-5, **characterized in that** the first (1) and the second food element (4, 5) are a bulbous plant.

8. A package according to claims 1-5, **characterized in that** the first (1) and the second food element (4, 5) are manufactured from fruit.

9. A package according to claims 1-5, **characterized in that** the first (1) and the second food element (4, 5) are a vegetable.

10. A package according to claims 1-5, **characterized in that** the first (1) and the second food element (4, 5) comprise substantially a mixture of ingredients, such that upon preparation of the mixture of ingredients, the shapes of the first (1) and the second food element (4, 5) are preserved.

11. A package according to claim 6 or 9, **characterized in that** the first (1) and the second food element (4, 5) are manufactured from potatoes.

## Patentansprüche

1. Packung, einen Nahrungsmittelbestandteil enthaltend, der eine Anzahl erster Nahrungsmittelelemente (1) und eine Anzahl zweiter Nahrungsmittelelemente (4, 5) umfasst, die nicht zusammengefügt sind, **dadurch gekennzeichnet, dass** jedes erste (1) und jedes zweite (4, 5) Nahrungsmittelelement, nachdem es zumindest einen Zubereitungsschritt erfahren hat, zum Verzehr geeignet ist, wobei die Gestalt des ersten Nahrungsmittelelements (1) so auf die Gestalt des zweiten Nahrungsmittelelements (4, 5) zugeschnitten ist, dass sie nach der Zubereitung zusammenwirken können, um ein drittes, zusammengesetztes Nahrungsmittelelement zu bilden, und die Gestalt des ersten und zweiten Nahrungsmittelelements derart ist, dass Kinder angeregt werden, den Nahrungsmittelbestandteil zu ergründen, indem sie die Nahrungsmittelelemente in ihre Hände nehmen, um sie zusammenzufügen, wodurch beim Kind die Hemmschwelle verringert wird, ein Nahrungsmittelelement in seinen Mund zu nehmen.

2. Packung nach Anspruch 1, **dadurch gekennzeichnet, dass** das zweite Nahrungsmittelelement (4, 5) zumindest teilweise in das erste Nahrungsmittelelement (1) aufgenommen werden kann.

3. Packung nach Anspruch 1 oder 2, **dadurch gekennzeichnet, dass** das erste Nahrungsmittelelement (1) im Wesentlichen eine konvexe Aussenseite hat und mit zumindest einem Hohlraum (2, 3) versehen ist, der von der Aussenseite her zugänglich ist, während das zweite Nahrungsmittelelement (4, 5) im Wesentlichen eine konvexe Aussenseite hat und zumindest teilweise in den zumindest einen Hohlraum (2, 3) des ersten Nahrungsmittelelements (1) aufgenommen werden kann.

4. Packung nach Anspruch 3, **dadurch gekennzeichnet, dass** der Hohlraum (2, 3) eine zylindrische Konfiguration hat, während das zweite Nahrungsmittelelement (4, 5) eine massive zylindrische Gestalt hat, so dass das zweite Nahrungsmittelelement (4, 5) in den zumindest einen zylindrischen Hohlraum (2, 3) des ersten Nahrungsmittelelements (1) aufgenommen werden kann.

5. Packung nach einem beliebigen der vorangehenden Ansprüche, **dadurch gekennzeichnet, dass** das zweite Nahrungsmittelelement (4, 5) so aus dem ersten Nahrungsmittelelement (1) gebildet worden ist, dass im ersten Nahrungsmittelelement (1) ein von der Aussenseite her zugänglicher Hohlraum (2, 3) geschaffen worden ist.

6. Packung nach einem beliebigen der vorangehenden Ansprüche, **dadurch gekennzeichnet, dass** das erste (1) und das zweite (4, 5) Nahrungsmittelelement ein Knollengewächs sind.

7. Packung nach Ansprüchen 1 bis 5, **dadurch gekennzeichnet, dass** das erste (1) und das zweite (4, 5) Nahrungsmittelelement ein Zwiebelgewächs sind.

8. Packung nach Ansprüchen 1 bis 5, **dadurch gekennzeichnet, dass** das erste (1) und das zweite (4, 5) Nahrungsmittelelement aus Obst hergestellt sind.

9. Packung nach Ansprüchen 1 bis 5, **dadurch gekennzeichnet, dass** das erste (1) und das zweite (4, 5) Nahrungsmittelelement ein Gemüse sind.

10. Packung nach Ansprüchen 1 bis 5, **dadurch gekennzeichnet, dass** das erste (1) und das zweite (4, 5) Nahrungsmittelelement im Wesentlichen eine Mischung von Bestandteilen umfassen, derart, dass nach Zubereitung der Mischung von Bestandteilen die Gestalt des ersten (1) und des zweiten (4, 5) Nahrungsmittelelements bewahrt ist.

11. Packung nach Anspruch 6 oder 9, **dadurch gekennzeichnet, dass** das erste (1) und das zweite (4, 5) Nahrungsmittelelement aus Kartoffeln hergestellt sind.

## Revendications

1. Conditionnement contenant un ingrédient alimentaire comprenant un nombre de premiers éléments alimentaires (1) et un nombre de deuxièmes éléments alimentaires (4, 5), lesquels éléments alimentaires ne sont pas réunis, dans lequel chaque premier (1) et chaque deuxième élément alimentaire (4, 5), après avoir subi au moins une opération de préparation, est approprié pour la consommation, la forme du premier élément alimentaire (1) étant adaptée à la forme du deuxième élément alimentaire (4, 5), de telle façon que, après préparation, ils peuvent coopérer pour former un troisième élément alimentaire composite, la forme du premier et du deuxième éléments alimentaires étant telle que des enfants soient stimulés pour explorer l'ingrédient alimentaire dans leurs mains en prenant les éléments alimentaires dans leurs mains pour les assembler, augmentant de ce fait l'intérêt pour l'enfant de mettre un élément alimentaire dans sa bouche.

2. Conditionnement selon la revendication 1, **caractérisé en ce que** le deuxième élément alimentaire (4, 5) est au moins en partie recevable dans le premier élément alimentaire (1).

3. Conditionnement selon la revendication 1 ou 2, **caractérisé en ce que** le premier élément alimentaire (1) a sensiblement une surface extérieure convexe avec au moins une cavité (2, 3) accessible depuis la surface extérieure, tandis que le deuxième élément alimentaire (4, 5) a sensiblement une surface extérieure convexe et est au moins en partie recevable dans la au moins une cavité (2, 3) du premier élément alimentaire (1).

4. Conditionnement selon la revendication 3, **caractérisé en ce que** la cavité (2, 3) a une configuration cylindrique, tandis que le deuxième élément alimentaire (4, 5) a une forme cylindrique massive, de telle façon que le deuxième élément alimentaire (4, 5) soit recevable dans la au moins une cavité cylindrique (2, 3) du premier élément alimentaire (1).

5. Conditionnement selon l'une quelconque des revendications précédentes, **caractérisé en ce que** l'on a formé le deuxième élément alimentaire (4, 5) à partir du premier élément alimentaire (1), de telle façon que l'on a formé dans le premier élément alimentaire (1) une cavité (2, 3) accessible à partir de la surface extérieure.

6. Conditionnement selon l'une quelconque des revendications précédentes, **caractérisé en ce que** le premier (1) et le deuxième élément alimentaire (4, 5) sont une plante tubéreuse.

7. Conditionnement selon les revendications 1 à 5, **caractérisé en ce que** l'on fabrique le premier (1) et le deuxième élément alimentaire (4, 5) sont une plante à bulbe.

8. Conditionnement selon les revendications 1 à 5, **caractérisé en ce que** l'on fabrique le premier (1) et le deuxième élément alimentaire (4, 5) à partir de fruit.

9. Conditionnement selon les revendications 1 à 5, **caractérisé en ce que** le premier (1) et le deuxième élément alimentaire (4, 5) sont un légume.

10. Conditionnement selon les revendications 1 à 5, **caractérisé en ce que** le premier (1) et le deuxième élément alimentaire (4, 5) comprennent sensiblement un mélange d'ingrédients, de telle façon que lors de la préparation du mélange des ingrédients, on préserve les formes du premier (1) et du deuxième (4, 5) élément alimentaire.

11. Conditionnement selon la revendication 6 ou 9, **caractérisé en ce que** l'on fabrique le premier (1) et le deuxième élément alimentaire (4, 5) à partir de pommes de terre.
